# EUROPEAN PATENT SPECIFICATION

(11) **EP 4 203 128 B1**
(45) Date of publication and mention of the grant of the patent: **02.12.2026**
(21) Application number: 22781621.2
(22) Date of filing: 30.03.2022
(51) Int. Cl.: H01M 10/04, H01M 10/44, H01M 4/04, H01M 50/30

(54) **BATTERY CELL MANUFACTURING METHOD AND BATTERY CELL MANUFACTURING APPARATUS**
VERFAHREN ZUR HERSTELLUNG EINER BATTERIEZELLE UND VORRICHTUNG ZUR HERSTELLUNG EINER BATTERIEZELLE
PROCÉDÉ DE FABRICATION D'ÉLÉMENT DE BATTERIE ET APPAREIL DE FABRICATION D'ÉLÉMENT DE BATTERIE

(30) Priority: 31.03.2021 KR 20210042363
(43) Date of publication of application: 28.06.2023
(73) Proprietor: LG Energy Solution, Ltd., Seoul 07335 (KR)
(72) Inventor: SIM, Hyung Sub, Daejeon 34122 (KR); LEE, Junoh, Daejeon 34122 (KR); SHIM, Kyuhun, Daejeon 34122 (KR); LEE, Gilyoung, Daejeon 34122 (KR); KIM, Geon Woo, Daejeon 34122 (KR); KIM, Mintae, Daejeon 34122 (KR)
(74) Representative: Goddar, Heinz J.
(86) International application number: PCT/KR2022/004530
(87) International publication number: WO 2022/211502

(56) References cited:
- EP-A1- 3 790 099
- EP-A2- 1 233 463
- JP-A- 2003 217 670
- JP-A- 2016 207 574
- KR-A- 20140 013 907
- KR-A- 20150 143 683
- KR-B1- 100 553 739

## Description

### [Technical Field]

This specification claims priority to and the benefit of Korean Patent Application No. 10-2021-0042363 filed in the Korean Intellectual Property Office on March 31, 2021.

The present invention relates to a battery cell manufacturing method.

### [Background Art]

A secondary battery that is easy to be applied according to product groups and has electrical characteristics, such as high energy density, is generally applied to an Electric Vehicle (EV) and a Hybrid Electric Vehicle (HEV) driven by an electric driving source, as well as portable devices.

The secondary battery is attracting attention as a new energy source for improving eco-friendliness and energy efficiency because secondary battery has not only the primary advantage of dramatically reducing the use of fossil fuels, but also the advantage that no by-products are generated from the use of energy.

The types of secondary batteries currently widely used include lithium ion batteries, lithium polymer batteries, nickel cadmium batteries, nickel hydride batteries, nickel zinc batteries, and the like. The operating voltage of the unit secondary battery cell is about 2.5 V to 4.5 V. Therefore, when a higher output voltage is required, a plurality of battery cells is connected in series to form a battery pack. In addition, according to the charge/discharge capacity required for the battery pack, a plurality of battery cells is connected in parallel to form a battery pack. Accordingly, the number of battery cells included in the battery pack and the type of electrical connection may be variously set according to a required output voltage and/or charge/discharge capacity.

On the other hand, as types of secondary battery cells, cylindrical, prismatic, and pouch-type battery cells are known. The battery cell may be a cylindrical battery cell. In the battery cell, a separation membrane that is an insulator is interposed between a positive electrode and a negative electrode, the positive electrode, the separation membrane, and the negative electrode are wound to form an electrode assembly in the form of a jelly roll, and the electrode assembly is inserted into a battery can together with an electrolyte to form a battery. In addition, a strip-shaped electrode tab may be connected to an uncoated portion of each of the positive electrode and the negative electrode, and the electrode tab electrically connects the electrode assembly and the externally exposed electrode terminal. For reference, the positive electrode terminal is a cap plate of a sealing body sealing an opening of the battery can, and the negative electrode terminal is the battery can.

However, according to the conventional battery cell having the foregoing structure, since current is concentrated in the strip-shaped electrode tab coupled to the uncoated portion of the positive electrode and/or the uncoated portion of the negative electrode, there are problem in that resistance is high, a lot of heat is generated, and current collection efficiency is not good.

For small cylindrical battery cells with a form factor of 18650 or 21700, resistance and heat are not a big issue. However, when the form factor is increased in order to apply the cylindrical battery cell to an electric vehicle, a problem may arise in that the cylindrical battery cell ignites as a lot of heat is generated around the electrode tab during the rapid charging process. The prior art relevant to the present invention is given by EP 1 233 463 A2 and EP 3 790 099 A1. It is known from the prior art an alkali metal secondary electrochemical cell provided with a removable gas relief valve. The gas release valve is positioned on the casing, in fluid flow communication between the inside thereof and the exterior. This gas release valve serves to eliminate cell gases that build up inside the casing during the cell's formation stage. Once the lithium-ion cell has completed formation, the gas release valve is removed and replaced with a hermetic closure. Removal of the gas release valve and sealing of the cell takes place in an environment in which no outside gas is capable of being introduced inside the casing. The cell can also be provided in a tank filled with inert gas and a filter which separates the cell gas from the inert gas. When cell formation is completed, the cell hermetically sealed.

### [Detailed Description of the Invention]

### [Technical Problem]

The present invention is to provide a battery cell manufacturing method in which safety problems, such as ignition due to gas generation, are alleviated.

### [Technical Solution]

The present invention is defined according to the subject matter of the appended independent claim. Particular embodiments are given by the additional features of the appended dependent claims. A battery cell manufacturing method may include: (A) coupling the exhaust chamber to the opening so as to seal the opening; (B) adjusting the exhaust chamber to an inert atmosphere; and (C) performing a pre-charge on the electrode assembly and discharging exhaust gas generated due to the pre-charge through the exhaust chamber.

A battery cell manufacturing apparatus may include an exhaust chamber in which a battery can which accommodates an electrode assembly and an electrolyte and has an opening at one side is disposed or which is coupled so as to seal the opening.

### [Advantageous Effects]

In the case of the battery cell manufacturing method, since the pre-charge is performed after the assembly of the battery cell is completed and before the activation process is performed, an operation of discharging the gas generated in this process is not performed.

The battery cell with improved capacity and/or output has an increased size compared to the 21700 cylindrical cell, so that the amount of gas generated during charging increases by approximately 2.5 to 3.5 times based on the volume compared to the existing case, and as a result, if gas discharge does not proceed together in the pre-charge process, the battery cell may be vulnerable to safety. For this reason, a facility/process capable of discharging gas during charging is required.

According to one aspect of the present invention, it is possible to discharge exhaust gas generated during the pre-charge through the opening and the exhaust chamber by disposing the battery can which accommodates the electrode assembly and the electrolyte and has the opening at one side within the exhaust chamber or coupling the exhaust chamber to the opening so as to seal the opening. Therefore, even if the amount of gas generated during the pre-charge of the battery cell with improved capacity and/or output is significantly increased compared to the existing case, the process proceeds while smoothly discharging the gas during the pre-charge process, thereby solving the safety problem.

According to another aspect of the present invention, by performing the pre-charge in the state where the one side of the battery can is opened, more oil vapors than in the normal state are generated, and there is a risk of fire and explosion due to the charging pin, which is the ignition point, so that it is possible to minimize safety problems during the pre-charge in a high-temperature environment by controlling the exhaust chamber to an inert atmosphere or, preferably, by injecting nitrogen gas to lower the oxygen concentration so as not to ignite.

According to another aspect of the present invention, by solving the above gas discharge problem, the size of the battery cell may be increased, which may be realized by improving the electrode terminal structure of the battery cell to increase the space efficiency in the battery can, thereby lowering the internal resistance and increasing the energy density.

### [Brief Description of Drawings]

The following drawings attached to the present specification illustrate exemplary embodiments of the present invention, and serve to help the further understanding of the technical spirit of the present invention together with the detailed description of the present invention to be described later, so that the present invention should not be construed as being limited only to the matters described in the drawings.

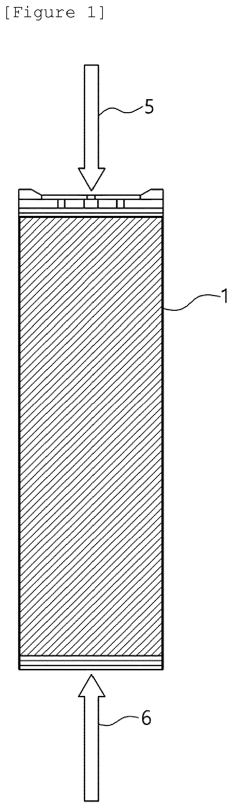

FIG. 1 is a diagram illustrating the case where a pre-charge is performed in a state where an opening of a battery can is sealed by a sealing body in a battery cell manufacturing method according to a comparative example of the present invention.

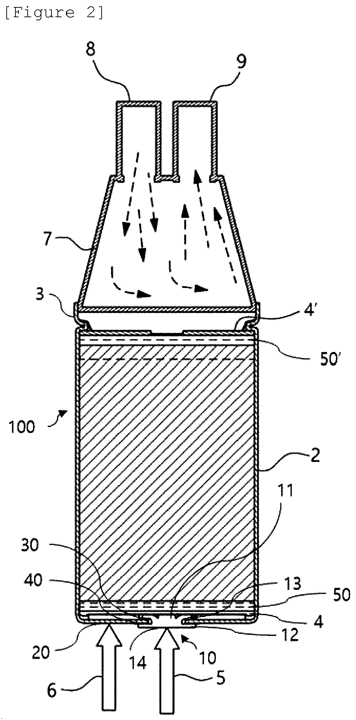

FIG. 2 is a diagram illustrating the case where a negative electrode terminal and a positive electrode terminal are provided to a bottom surface of the battery can and the pre-charge is performed in the state where an opening of the battery can is opened, and exhaust gas is discharged in the battery cell manufacturing method according to an exemplary embodiment of the present invention.

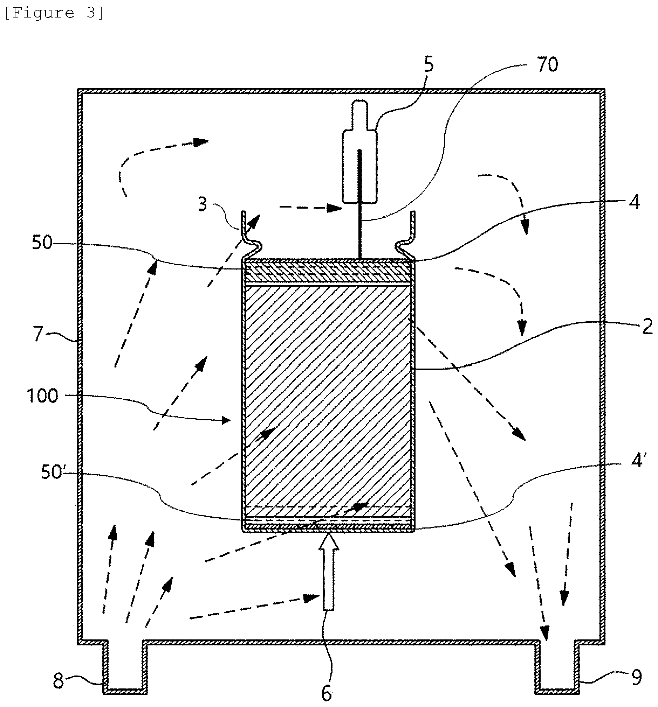

FIG. 3 is a diagram illustrating the case where in the state where the opening of the battery can is opened, the negative electrode terminal is provided to the bottom of the battery can and the positive electrode terminal is provided to the other end of the electrode assembly facing the bottom, and the pre-charge is performed and exhaust gas is discharged at both ends of the electrode assembly in the battery cell manufacturing method according to the exemplary embodiment of the present invention.

### <Explanation of Reference Numerals and Symbols>

1: Assembling-completed cell
2: Cylindrical battery can with opened one side
3: Opening
4, 4': Current collector plate
5: (+) charging pin
6: (-) charging pin
7: Exhaust chamber
8: Injection part
9: Exhaust part
10: Electrode terminal
11: Body portion
12: Outer flange portion
13: Inner flange portion
14: Flat portion
20: Bottom
30: Through-hole
40: Gasket
50, 50': Uncoated portion
70: Lead tap
100: Battery cell

### [Best Mode]

Terms or words used in the present specification and the claims shall not be interpreted to be limited as general or lexical meanings, and on the principle that the inventor can appropriately define a concept of a term for describing the invention by the best method, the terms or the words shall be interpreted as a meaning and a concept corresponding to the technical spirit of the present invention.

Further, when a part "includes" other constituent elements, this means that other constituent elements may be further included, rather than excluding other constituent elements, unless otherwise stated.

In addition, the terms "- unit", "- device" and "module" described in the specification mean units for processing at least one function and operation. Hereinafter, exemplary embodiments of the present invention will be described with reference to the drawings.

A battery cell manufacturing method may include: (A) coupling the exhaust chamber to the opening so as to seal the opening; (B) adjusting the exhaust chamber to an inert atmosphere; and (C) performing a pre-charge on the electrode assembly and discharging exhaust gas generated due to the pre-charge through the exhaust chamber.

The order of each operation is not limited by the order of description. In an example, operation (B) may be performed before operation (A).

According to the exemplary embodiment, a battery can which accommodates an electrode assembly and an electrolyte and has an opening at one side may be disposed within an exhaust chamber.

Charging terminals may be positioned in the exhaust chamber to be charged at both ends of the electrode assembly accommodated in the battery can, and the charging terminal may also be positioned at one end of the battery can.

The end of the electrode assembly means an end of the electrode assembly in a vertical direction of a winding axis.

The battery can is disposed within the exhaust chamber, so that it is possible to discharge gas generated during the progress of a pre-charge through the opening and the exhaust chamber, and the charging terminals are positioned at both ends of the electrode assembly, so that it is possible to perform the pre-charge in the inert atmosphere within the exhaust chamber and minimize problems in safety.

According to the exemplary embodiment, the battery can which accommodates the electrode assembly and the electrolyte and has the opening at one side may be coupled the opening of the exhaust chamber so as to seal the exhaust chamber.

The battery can having the opening at one side is in an open state in which the battery can is not coupled by a sealing body for sealing the opening of the battery can, and may be coupled with the exhaust chamber to maintain a sealed state.

As described above, by maintaining the sealed state, it is possible to adjust the exhaust chamber to the inert atmosphere. In addition to this, as long as the exhaust chamber is adjustable to the inert atmosphere, it is not limited to the sealed state.

By maintaining the exhaust chamber in the inert atmosphere, it is possible to minimize the risk of fire and explosion caused by charging pins, and by coupling the exhaust chamber to the opening so as to seal the exhaust chamber, it is possible to discharge exhaust gas generated during the progress of the pre-charge through the opening and the exhaust chamber.

Further, by coupling the exhaust chamber to the opening so as to seal the exhaust chamber, oil vapor generated during the progress of the pre-charge may be discharged through the exhaust chamber and may be spatially separated from the charging pin which is an ignition point, so that it is possible to minimize problems in safety that may occur during the pre-charge even in a high-temperature environment.

The battery can is made of a conductive metal material. In one example, the battery can may be made of a steel material, but the present invention is not limited thereto.

According to the exemplary embodiment, the adjustment of the exhaust chamber to the inert atmosphere is performed by adjusting an oxygen concentration within the exhaust chamber to 4 vol% or less.

When the oxygen concentration within the exhaust chamber is adjusted to 4 vol% or less, since the concentration of oxygen among the three factors of ignition, that is, ignition point, oil vapor, and oxygen, is in the state in which ignition does not occur, thereby solving safety problems that may occur during the pre-charge.

The exhaust chamber may be a vacuum state, and other than that, it is not particularly limited as long as the inert atmosphere may be maintained within the exhaust chamber.

By maintaining the exhaust chamber in the inert atmosphere, it is possible to alleviate safety problems during the pre-charge in a high-temperature environment with a lot of oil vapor.

According to the exemplary embodiment, the operation of performing the pre-charge on the electrode assembly and discharging the exhaust gas generated due to the pre-charge through the exhaust chamber may be performed by opening one side of the battery can in the state where the exhaust chamber has been adjusted to the inert atmosphere.

Therefore, the gas generated during the pre-charge may be discharged through the opening of the battery can and the exhaust chamber. As the process proceeds while the gas generated during the pre-charge is smoothly discharged, it is possible to solve the safety problems.

The battery cell according to the present invention may be a cylindrical battery cell.

FIG. 1 is a diagram illustrating the case where a pre-charge is performed in a state where an opening 3 of a battery can is sealed by a sealing body in a battery cell manufacturing method according to a comparative example of the present invention.

Referring to FIG. 1, in the battery cell manufacturing method, after a battery cell is completely assembled, a pre-charge may be performed. In one example, the pre-charge may be performed in the state where the battery can is sealed by a sealing body, and an operation of discharging exhaust gas generated in the process is not performed.

As described above, when the pre-charge is performed after the completion of the assembly of the battery cell, the amount of gas generated in the battery cell increases, and when the internal pressure is excessively increased due to the increased amount of gas, a safety problem may occur.

Accordingly, particularly in the case of the cell with improved capacity and/or output, it is also necessary to facilitate the gas discharge operation at the same time by performing the pre-charge in the state where the opening 3 at one side of the battery can in which the electrode assembly and the electrolyte are accommodated is open.

FIG. 2 is a diagram illustrating the case where a negative electrode terminal and a positive electrode terminal are provided to a bottom surface of the battery can and the pre-charge is performed in the state where an opening 3 of the battery can is opened, and exhaust gas is discharged through the opening 3 of the battery can in the battery cell manufacturing method according to the exemplary embodiment of the present invention.

Referring to FIG. 2, a battery cell 100 having a structure in which the positive electrode terminal and the negative electrode terminal are electrically connected at the opposite side of the opening 3 at one side of the battery can, that is, a bottom 20 of the battery can, is illustrated.

The battery cell 100 includes an electrode terminal 10 riveted through a through-hole 30 formed in the bottom 20, and a gasket 40 provided between the electrode terminal 10 and an outer diameter of the through-hole to isolate the electrode terminal 10 with the battery can 2.

In the case of the cylindrical battery cell, the negative electrode terminal is provided to the bottom surface, and the riveted electrode terminal may be a positive electrode terminal.

Therefore, the pre-charge may be performed by approaching a (+) charging pin 5 and a (-) charging pin 6 from one side of the cylindrical battery cell and connecting the positive electrode terminal and the negative electrode terminal. The connection may be to make the (+) charging pin 5 and the (-) charging pin 6 be in contact with the positive electrode terminal and the negative electrode terminal.

Since the charging proceeds in one direction of the cylindrical cell, the exhaust chamber 7 is provided in a shape to fit the opening 3 of the battery can to be coupled with the opening 3 while sealing the opening 3, and thus safe exhaust is possible without interference with the charging pin. That is, the charging pin that is the ignition point and the exhaust chamber are spatially separated from each other, so that it is possible to minimize the problem in safety that may occur during the pre-charge even in the high-temperature environment.

In this case, the opposite side of the bottom 20 of the battery can on which the positive electrode terminal and the negative electrode terminal are formed is opened, so that it is possible to discharge exhaust gas generated in the pre-charge operation through the opening.

Therefore, the pre-charge operation and the gas discharging operation may be performed at the same time, so that there is an advantage in that the process is rapid and simple.

For the gas discharging operation, in the battery can 2 having the opening at one side, the exhaust chamber 7 may be coupled to the opening 3 so as to seal the opening 3. In this case, the process proceeds while the gas generated in the pre-charge process is smoothly discharged, thereby solving the safety problem.

FIG. 3 is a diagram illustrating the case where in the state where the opening 3 of the battery can is opened, the negative electrode terminal is provided to the bottom 20 of the battery can and the positive electrode terminal is provided to the other end of the electrode assembly facing the bottom, and the pre-charge is performed and exhaust gas is discharged at both ends of the electrode assembly in the battery cell manufacturing method according to the exemplary embodiment of the present invention.

Referring to FIG. 3, the cylindrical battery cell includes a positive electrode current collecting plate 4 electrically connected with a positive electrode uncoated portion 50 provided to the other end of the electrode assembly facing the bottom 20, and a positive electrode lead tap 70 provided to the current collecting plate is exposed to the outside through the upper opening of the battery can and the positive electrode lead tap 70 is in contact with the (+) charging pin 5.

Further, the (-) charging pin 6 is in contact with the bottom surface of the battery can electrically connected with a negative electrode uncoated portion 50' of the electrode assembly.

In this case, the (+) charging pin 5 that is in contact with the positive electrode lead tap 70 may have, for example, a slit into which the positive electrode lead tap 70 is insertable, or have a structure including a grip with which both surfaces of the positive electrode lead tap 70 may be grasped.

Even in the process illustrated in FIG. 3, similar to FIG. 2, the pre-charge is performed in the state where one side of the battery can is open, not sealed by the sealing body, so that the gas may be easily discharged through the opening 3.

In the gas discharging operation, similar to the foregoing, the battery can having the opening 3 at one side in the state in which the upper part is opened is disposed within the exhaust chamber and then exhaust gas generated during the pre-charge may be removed.

In the meantime, although not illustrated in the drawing, the cylindrical battery cells in the state in which one side of the battery can is opened may be precharged through the individual channel in the state of being loaded in a pallet, and the gas generated in this process may be removed from the inside of the cylindrical battery cell through the exhaust chamber 7.

According to the exemplary embodiment, the electrode assembly has a structure in which a first electrode, a separation membrane, and a second electrode are stacked and wound, the first electrode and the battery can 2 are electrically connected, and the battery cell further includes the electrode terminal 10 electrically connected with the second electrode.

Herein, the first electrode may be a negative electrode and the second electrode may be a positive electrode.

According to the exemplary embodiment, in the operation of adjusting the exhaust chamber 7 to the inert atmosphere, the concentration of oxygen within the exhaust chamber may be adjusted to 4 vol% or less, and the operation may be an operation of injecting inert gas into the exhaust chamber 7.

By adjusting the concentration of oxygen within the exhaust chamber to 4 vol% or less, it is possible to adjust the exhaust chamber 7 to the inert atmosphere, and this may be adjusted by injecting inert gas to the exhaust chamber 7.

When the concentration of oxygen within the exhaust chamber 7 is adjusted to 4 vol% or less, the concentration of oxygen among the three factors of ignition is in the state in which the battery cell will not be ignited, so it is possible to solve safety problems that may occur during the pre-charge.

In this case, the inert gas injected into the exhaust chamber 7 may be nitrogen gas, and the present invention is not limited thereto.

The inert gas injected into the exhaust chamber 7 is continuously supplied to the electrode assembly during the process of performing the pre-charge, so that the exhaust chamber 7 may be adjusted to the inert atmosphere. The inert gas may be, for example, nitrogen gas, and the present invention is not limited thereto.

According to the exemplary embodiment, the exhaust chamber 7 may include an injection part 8 for injecting inert gas and an exhaust part 9 discharging exhaust gas.

The injection part 8 and the exhaust part 9 are not limited in their structures or positions as long as the injection part 8 injects the gas and the exhaust part 9 discharges the gas. For example, the injection part 8 and the exhaust part 9 may be provided to one cross-section of the exhaust chamber 7 or in a diagonal direction of the exhaust chamber 7 so that the injected gas may be smoothly circulated.

A pressure of the inert gas injected into the injection part 8 may be 0.2 mpa or more, 0.3 mpa or more, or 0.4 mpa or more. A pressure of the inert gas injected into the injection part 8 may be 0.8 mpa or less, 0.7 mpa or less, or 0.6 mpa or less.

A pressure of the exhaust gas discharged to the exhaust part 9 may be varied depending on the pressure of the inert gas injected into the injection part 8 or a size of the battery cell.

A gas supply device supplying inert gas may be connected to the injection part 8, and the gas supply device may continuously supply the inert gas with a predetermined pressure to maintain the inert atmosphere inside the exhaust chamber.

Referring to FIGS. 2 and 3, a flow of the inert gas injected through the injection part 8 and discharged through the exhaust part 9 is indicated with an arrow.

According to the exemplary embodiment, the operation of injecting the inert gas may be performed until the concentration of oxygen within the exhaust chamber 7 is 4 vol% or less through the injection part 8. The inert gas is injected until the concentration of oxygen within the exhaust chamber 7 is 4 vol% or less, so that the inert atmosphere within the exhaust chamber 7 may be maintained, and thus it is possible to alleviate the problem in safety that occurs during the pre-charge in a high-temperature environment with a lot of oil vapor.

When the concentration of oxygen within the exhaust chamber 7 is 4 vol% or less, the concentration of oxygen among the tree factors of ignition, that is, the ignition point, oil vapor, and oxygen, is the state in which the battery cell will not be ignited, thereby solving the problem in safety that may occur during the pre-charge.

According to one aspect, an operation of injecting the inert gas into the exhaust chamber 7 before the battery can 2 is disposed within the exhaust chamber 7 or the exhaust chamber 7 is coupled to the opening 3 may be further included. In this case, it is possible to rapidly adjust the inert atmosphere within the exhaust chamber 7, and minimize the problem in safety.

The exemplary embodiment of the present invention provides the battery cell manufacturing method in which in the operation of coupling the exhaust chamber 7 to the opening 3 of the battery can 2 which accommodates the electrode assembly and the electrolyte and has the opening 3 at one side so as to seal the opening 3, the battery can 2 includes the electrode terminal 10 riveted through the through-hole 30 formed in the bottom 20 of the battery can and the gasket 40 provided between the electrode terminal 10 and the outer diameter of the through hole 30.

According to the exemplary embodiment of the present invention, there is provided the battery cell manufacturing method in which the electrode terminal 10 includes: a body portion 11 inserted into the through-hole 30; an outer flange portion 12 extended along an outer surface from a circumference of one side of the body portion exposed through the outer surface of the bottom; an inner flange portion 13 extended toward an inner surface from a circumference of the other side of the body portion exposed through the inner surface of the bottom; and a flat portion 14 provided inside the inner flange portion.

The battery can 2 according to the exemplary embodiment of the present invention may include the riveted electrode terminal 10 in the bottom 20 of the battery can. For example, the electrode terminal 10 riveted in the bottom 20 of the battery can may have a riveting structure.

According to the riveting structure, both the positive electrode terminal and the negative electrode terminal are provided to one end of the cylindrical cell, so that the charging may be performed in one end of the cylindrical cell. One end of the cylindrical cell may be a bottom surface of the battery can.

According to the exemplary embodiment, the battery cell 100 includes the negative electrode terminal provided to the bottom 20 of the battery can, and the riveted electrode terminal 10 is the positive electrode terminal, and the pre-charge may be performed by connecting the charging terminal to the negative electrode terminal and the positive electrode terminal.

The negative electrode terminal and the positive electrode terminal may be provided to the bottom surface of the battery can.

Therefore, the exhaust chamber 7 for supplying the inert gas in the other direction and discharging the gas is provided in the shape fitting to the opening 3 of the battery can to be coupled to the opening 3 while sealing the opening 3, and thus, the safe exhaust is possible without interference with the charging pins 5 and 6.

Referring to FIG. 2, the riveting structure of the electrode terminal 10 according to the exemplary embodiment may include the cylindrical battery can 2 with the opened one side, the electrode terminal 10 riveted through the through-hole 30 formed in the bottom 20 of the battery can 2, and the gasket 40 provided between the electrode terminal 10 and the outer diameter of the through-hole 30.

The battery can 2 is made of a conductive metal material. In one example, the battery can 2 may be made of a steel material, and the present invention is not limited thereto.

The electrode terminal 10 is made of a conductive metal material. In one example, the electrode terminal 10 may be made of aluminum, and the present invention is not limited thereto.

The gasket 40 may be made of a polymer resin having an insulating property and elasticity. In one example, the gasket 40 may be made of polypropylene, polybutylene terephthalate, polyethylene fluoride, and the like, and the present invention is not limited thereto.

Preferably, the electrode terminal 10 may include the body portion 11 inserted into the through-hole 30, the outer flange portion 12 extended along the outer surface from the circumference of one side of the body portion 11 exposed through the outer surface of the bottom 20 of the battery can 2, the inner flange portion 13 extended toward the inner surface from the circumference of the other side of the body portion 11 exposed through the inner surface of the bottom 20 of the battery can 2, and the flat portion 14 provided inside the inner flange portion 13.

Preferably, the flat portion 14 and the inner surface of the bottom 20 of the battery can 2 may be parallel to each other. Here, 'parallel' means substantially parallel when observed with the naked eye.

According to the exemplary embodiment of the present invention, the riveting structure of the electrode terminal 10 may be formed by using a caulking jig that moves up and down. First, the gasket 40 is interposed in the through-hole 30 formed in the bottom 20 of the battery can 2 to insert a preform (not illustrated) of the electrode terminal 10. The preform refers to the electrode terminal before riveting.

Next, the caulking jig is inserted into the inner space of the battery can 2. The caulking jig includes a recess and a protrusion corresponding to the final shape of the electrode terminal 10 on the surface facing the preform in order to form the electrode terminal 10 by riveting the preform.

Next, the preform is transformed to the riveted electrode terminal 10 by moving the calking jig downward and press-forming the upper part of the preform.

During the pressurization of the preform by the caulking jig, the gasket 40 interposed between the outer flange portion 12 and the outer surface of the bottom 20 of the battery can 2 is elastically compressed to have a decreased thickness. Therefore, the sealing property between the riveted electrode terminal 10 and the battery can 2 is remarkably improved.

Preferably, the gasket 40 may be sufficiently compressed so as to secure desired sealing strength without being physically damaged in the process in which the preform is riveted.

In one example, when the gasket 40 is formed of polybutylene terephthalate, the gasket 40 preferably has a compression ratio of 50% or more at the point where the gasket 40 is compressed to a minimum thickness. The compression ratio is a ratio of the thickness change before and after the compression to the thickness before compression.

In another example, when the gasket 40 is formed of polyfluoroethylene, the gasket 40 preferably has a compression ratio of 60% or more at the point where the gasket 40 is compressed to a minimum thickness.

In another example, when the gasket 40 is formed of polypropylene, the gasket 40 preferably has a compression ratio of 60% or more at the point where the gasket 40 is compressed to a minimum thickness.

Preferably, the press-forming of the upper part of the preform may be performed in stages by performing the vertical movement of the caulking jig at least twice or more. That is, the preform may be transformed several times by press-forming the preform in stages. In this case, the pressure applied to the caulking jig may increase in stages. In this case, stress applied to the preform is distributed several times, it is possible to prevent the gasket 40 from being damaged during the caulking process.

After the press-forming of the preform by using the caulking jig is completed, when the caulking jig is separated from the battery can 2, it is possible to obtain the riveting structure of the electrode terminal 10 according to the exemplary embodiment of the present invention as illustrated in FIG. 2.

According to the exemplary embodiment, the caulking jig press-forms the upper part of the preform through the vertical movement inside the battery can 2. Depending on the case, for the press-forming of the preform, a rotary rotation jig used in the related art may be used.

However, the rotary rotation jig rotates in a state inclined at a predetermined angle with respect to the center axis of the battery can 2. Therefore, the rotary rotation jig having a large rotation radius may interfere with an inner wall of the battery can **2.** Further, when a depth of the battery can 2 is large, a length of the rotary rotation jig is also increased as much as the depth. In this case, as the rotation radius of the end of the rotary rotation jig increases, the press-forming of the preform may not be properly performed. Therefore, the press-forming using the caulking jig is more effective than the method using the rotary rotation jig.

The riveting structure of the electrode terminal 10 according to the exemplary embodiment of the present invention is applicable to the battery cell 100.

In an example, the battery cell may include a battery can. The battery can may have a cylindrical shape. The size of the battery can may be a circular diameter of 30 mm to 55 mm and a height of 60 mm to 120 mm at both ends. Preferably, the cylindrical diameter × the height of the cylindrical battery can may be 46 mm × 60 mm, 46 mm × 80 mm, 46 mm × 90 mm, or 46 mm × 120 mm.

Preferably, the cylindrical battery cell may be, for example, a cylindrical battery cell in which the ratio of the form factor (defined as a value obtained by dividing the diameter of the cylindrical battery cell by the height, that is, the ratio of the diameter Φ to the height H) is greater than approximately 0.4.

Herein, the form factor means a value representing the diameter and the height of the cylindrical battery cell. The cylindrical battery cell according to the exemplary embodiment of the present invention may be, for example, 46110 cell, 48750 cell, 48110 cell, 48800 cell, 46800 cell, and 46900 cell. In the numerical value representing the form factor, the first two numbers indicate the diameter of the cell, the next two numbers indicate the height of the cell, and the last number 0 indicates that the cell has a circular cross section.

The battery cell according to the exemplary embodiment of the present invention may be a cylindrical battery cell having a substantially cylindrical shape, and having a diameter of about 46 mm, a height of about 110 mm, and a form factor ratio of 0.418.

The battery cell according to another exemplary embodiment may be a cylindrical battery cell having a substantially cylindrical shape, and having a diameter of about 48 mm, a height of about 75 mm, and a form factor ratio of 0.640.

The battery cell according to another exemplary embodiment of the present invention may be a cylindrical battery cell having a substantially cylindrical shape, and having a diameter of about 48 mm, a height of about 110 mm, and a form factor ratio of 0.418.

The battery cell according to another exemplary embodiment of the present invention may be a cylindrical battery cell having a substantially cylindrical shape, and having a diameter of about 48 mm, a height of about 80 mm, and a form factor ratio of 0.600.

The battery cell according to another exemplary embodiment of the present invention may be a cylindrical battery cell having a substantially cylindrical shape, and having a diameter of about 46 mm, a height of about 80 mm, and a form factor ratio of 0.575.

The battery cell according to another exemplary embodiment of the present invention may be a cylindrical battery cell having a substantially cylindrical shape, and having a diameter of about 46 mm, a height of about 90 mm, and a form factor ratio of 0.511.

In the related art, the battery cells having the ratio of the form factor of about 0.4 or less have been used. That is, in the related art, for example, the 18650 cell, the 21700 cell, and the like are used. The 18650 cell has a diameter of about 18 mm, a height of about 65 mm, and a form factor ratio of 0.277. The 21700 cell has a diameter of about 21 mm, a height of about 70 mm, and a form factor ratio of 0.300.

The battery cell 100 according to the exemplary embodiment of the present invention includes the electrode assembly in which the first electrode and the second electrode shaped like a sheet are wound with the separation membrane interposed therebetween, and which includes the uncoated portion 50' of the first electrode and the uncoated portion 50 of the second electrode extended from the both ends and exposed.

The electrode according to the exemplary embodiment of the present invention may be an electrode plate, and in the exemplary embodiment of the present invention, the first electrode may be a negative electrode plate and the second electrode may be a positive electrode plate. The opposite case thereof is also possible as a matter of course.

The battery cell 100 also includes the battery can 2 which accommodates the electrode assembly and is electrically connected with the uncoated portion 50' of the first electrode.

Preferably, one side of the battery can 2 is opened. Further, the bottom 20 of the battery can 2 has a structure in which the electrode terminal 10 is riveted in the through-hole 30 through the caulking process.

Further, the battery cell 100 may include the gasket 40 provided between the electrode terminal 10 and the outer diameter of the through-hole 30.

The battery cell 100 may include a sealing body (not illustrated) sealing the opened end of the battery can 2 so as to be insulated from the battery can 2. Preferably, the sealing body may include a cap plate having no polarity and a sealing gasket interposed between an edge of the cap plate and the opened end of the battery can.

The cap plate may be made of a conductive metal material, such as aluminum, steel, or nickel. Further, the sealing gasket may be made of polypropylene, polybutylene terephthalate, polyethylene fluoride, or the like having insulating property and elasticity. However, the present invention is not limited by the materials of the cap plate and the sealing gasket.

The cap plate may include a vent notch that ruptures when the pressure inside the battery can exceeds a threshold. The vent notch may be formed on both surfaces of the cap plate. The vent notches may form a continuous or discontinuous circular pattern, a straight pattern, or any other pattern on the surface of the cap plate.

The battery can 2 may include a crimping portion extended and bent toward the inside of the battery can 2 to wrap and fix the edge of the cap plate together with the sealing gasket in order to fix the sealing body (not illustrated).

The battery can 2 may also include a beading portion pressed into the inside of the battery can 2 in a region adjacent the opened end. The beading portion supports the edge of the sealing body, in particular, the outer peripheral surface of the sealing gasket, when the sealing body is fixed by the crimping portion.

The battery cell 100 may also further include a current collector plate 4' welded to the uncoated portion 50' of the first electrode. The current collector plate is made of a conductive metal material, such as aluminum, steel, or nickel. Preferably, at least a portion of an edge of the current collector plate that is not in contact with the uncoated portion 50' of the first electrode may be interposed between the beading portion and the sealing gasket and fixed by the crimping portion.

The battery cell 100 may also include the current collector plate 4 welded to the uncoated portion 50 of the second electrode. Preferably, at least a portion of the current collector plate 4 may be welded to the flat portion 14 of the electrode terminal 10.

Preferably, when the current collector plate 4 is welded, a welding tool may be inserted through a cavity present in a core of the electrode assembly to reach a welding point of the current collector plate 4. Further, when the current collector plate 4 is welded to the flat portion 14 of the electrode terminal 10, the electrode terminal 10 supports the welding region of the current collector plate 4, so a strong pressure is applied to the welding region to improve the welding quality. Further, since the flat portion 14 of the electrode terminal 10 has a large area, a wide welding region may also be secured. Accordingly, it is possible to lower the internal resistance of the battery cell 100 by lowering the contact resistance of the welding region. The face-to-face welding structure of the riveted electrode terminal 10 and the current collector plate 4 is very useful for rapid charging using a high c-rate current. This is because the current density per unit area may be lowered in the cross section in the direction in which the current flows, so that the amount of heat generated in the current path may be lower than that of the related art.

When the flat portion 14 of the electrode terminal 10 is welded to the current collector plate 4, any one of laser welding, ultrasonic welding, spot welding, and resistance welding may be used. The area of the flat portion 14 may be adjusted differently depending on the welding method, but is preferably 2 mm or more for welding strength and ease of the welding process.

In one example, when the flat portion 14 and the current collector plate 4 are welded with a laser and are welded in a continuous or discontinuous line in the form of a circular pattern, the diameter of the flat portion 14 is preferably 4 mm or more. When the diameter of the flat portion 14 satisfies the corresponding conditions, it is possible to secure welding strength, and there is no difficulty in proceeding with the welding process by inserting the ultrasonic welding tool into the cavity of the electrode assembly.

In another example, when the flat portion 14 and the current collector plate 4 are ultrasonically welded and are welded in a circular pattern, the diameter of the flat portion 14 is preferably 2 mm or more. When the diameter of the flat portion 14 satisfies the corresponding conditions, it is possible to secure welding strength, and there is no difficulty in proceeding with the welding process by inserting the laser welding tool into the cavity of the electrode assembly.

In the battery cell 100 according to the exemplary embodiment of the present invention, the cap plate of the sealing body (not illustrated) does not have polarity. Instead, the current collector plate is connected to the sidewall of the battery can 2 so that the outer surface of the bottom 20 of the battery can 2 has a polarity opposite to that of the electrode terminal 10. Therefore, when a plurality of cells is to be connected in series and/or in parallel, wiring, such as a bus bar connection, may be performed at the top of the battery cell 100 using the outer surface of the bottom 20 of the battery can 2 and the electrode terminal 10. Through this, the energy density can be improved by increasing the number of cells that may be mounted in the same space.

According to the exemplary embodiment, in the operation of coupling the exhaust chamber 7 to the opening 3 of the battery can 2 which accommodates the electrode assembly and the electrolyte and has the opening at one side so as to seal the opening 3, the battery can 2 includes the electrode terminal 10 riveted through the through-hole 30 formed in the bottom 20 of the battery can and the gasket 40 provided between the electrode terminal 10 and the outer diameter of the through-hole 30.

According to the exemplary embodiment, in the operation of coupling the exhaust chamber 7 to the opening 3 of the battery can 2 which accommodates the electrode assembly and the electrolyte and has the opening at one side so as to seal the opening 3, the battery cell 100 includes a negative electrode terminal provided in the bottom 20 of the battery can, the riveted electrode terminal 10 is a positive electrode terminal, and when the pre-charge is performed on the electrode assembly, the pre-charge may be performed by connecting the charging terminal to the negative electrode terminal and the positive electrode terminal.

Further, the charging terminal may include the (+) charging pin 5 connected with the positive electrode terminal and the (-) charging pin 6 connected with the negative electrode terminal.

According to the exemplary embodiment, the negative electrode terminal and the positive electrode terminal may be provided on a bottom surface of the battery can. Therefore, charging proceeds at one end of the electrode assembly, so that when the exhaust chamber 7 is coupled to seal the opening 3, safe exhaust is possible without interference with the charging pin (see FIG. 2).

According to the exemplary embodiment, in an operation of disposing the battery can 2 which accommodates the electrode assembly and the electrolyte and has the opening at one side in the exhaust chamber 7, the electrode assembly has a structure in which the first electrode, the separation membrane, and the second electrode are stacked and wound, the first electrode and the battery can 2 are electrically connected, and the battery cell 100 may further include the electrode terminal 10 electrically connected with the second electrode.

Preferably, at least one of the first electrode and the second electrode includes a current collector and an electrode active material layer provided on the current collector, and the current collector includes uncoated portions 50 and 50' where the electrode active material layer is not provided, and the first electrode is electrically connected to the bottom 20 of the battery can, and the battery cell further includes the current collector plate 4 electrically connected to the uncoated portion 50 of the second electrode.

The first electrode or the second electrode may have a structure in which an active material is coated on the sheet-shaped current collector, and may include the uncoated portions 50 and 50' on one long side along the winding direction.

According to the exemplary embodiment, the current collector plate 4 electrically connected to the uncoated portion 50 of the second electrode may further include a lead tab 70 electrically connected to the electrode terminal.

The first electrode may be a negative electrode, and the second electrode may be a positive electrode.

The electrode assembly may be wound in one direction after sequentially stacking the negative electrode, the separation membrane, and the positive electrode, and in this case, the uncoated portions of the positive electrode and the negative electrode may be disposed in opposite directions.

After the winding process, the uncoated portion 50 of the positive electrode and the uncoated portion 50' of the negative electrode may be bent toward the core, and the current collector plates 4 and 4' may be coupled to the uncoated portions 50 and 50' by welding the current collector plates 4 and 4' to the uncoated portions 50 and 50', respectively.

Since a separate electrode tab is not coupled to the uncoated portions of the positive electrode and negative electrode, and the current collector plate is connected to an external electrode terminal, and the current path is formed with a large cross-sectional area along the winding axis direction of the electrode assembly, there is an advantage in that the resistance of the battery cell may be lowered. This is because resistance is inversely proportional to the cross-sectional area of the path through which the current flows.

The battery cell 100 may include the battery can 2 and the sealing body (not illustrated), and the sealing body includes the cap plate, the sealing gasket, and a connecting plate. The sealing gasket surrounds the edge of the cap plate and is fixed by means of the crimping portion. Further, the electrode assembly is fixed in the battery can 2 by the beading portion to prevent up-and-down flow.

Referring to FIG. 3, typically, the positive electrode terminal is the cap plate of the sealing body (not illustrated), and the negative electrode terminal is the battery can 2. Therefore, the current collector plate 4 coupled to the uncoated portion 50 of the positive electrode is electrically connected to the connection plate attached to the cap plate through the lead tab 70 in the form of a strip. Further, the current collector plate 4' coupled to the uncoated portion 50' of the negative electrode plate is electrically connected to the bottom 20 of the battery can 2.

When the current collector plate 4 is connected to the connection plate, the lead tab 70 in the form of a strip is used. The lead tab 70 may be separately attached to the current collector plate 4 or manufactured integrally with the current collector plate 4.

According to the exemplary embodiment, in the operation of disposing the battery can 2 within the exhaust chamber 7, the battery cell 100 includes the negative electrode terminal electrically connected to the first electrode and the positive electrode terminal electrically connected to the second electrode provided at both ends, and when the pre-charge is performed on the electrode assembly, the pre-charge may be performed by connecting he charging terminal to the negative electrode terminal and the positive electrode terminal.

Further, the charging terminal may include the (+) charging pin 5 connected with the positive electrode terminal and the (-) charging pin 6 connected with the negative electrode terminal. The (+) charging pin 5 and (-) charging pin 6 connected to the charging terminal may be in contact with the charging terminal.

Referring to FIG. 3, according to the exemplary embodiment, the negative electrode terminal and the positive electrode terminal may be provided at both ends of the electrode assembly, respectively. Both ends of the electrode assembly mean both ends perpendicular to the winding axis of the electrode assembly.

According to the exemplary embodiment, the battery cell 100 includes the negative electrode terminal electrically connected to the first electrode and the positive electrode terminal electrically connected to the second electrode provided at both ends, and the pre-charge is performed by connecting the charging terminal to the negative electrode terminal and the positive electrode terminal.

Since the charging proceeds at both ends of the electrode assembly, and the process proceeds while the gas is smoothly discharged when the battery can 2 is disposed in the exhaust chamber 7, it is possible to solve the safety problem.

A battery cell manufacturing apparatus may include an exhaust chamber 7 in which a battery can 2 which accommodates an electrode assembly and an electrolyte and has an opening 3 at one side is disposed or which may be coupled so as to seal the opening 3.

According to the exemplary embodiment, the exhaust chamber 7 may include an injection part 8 for injecting an inert gas and an exhaust part 9 for discharging the exhaust gas.

The injection part 8 and the exhaust part 9 may be provided on one side of the exhaust chamber 7, as long as the inert gas is injected and discharged, the present invention is not limited thereto.

The exhaust chamber 7 that may be coupled to seal the opening 3 of the battery can 2 having the opening 3 on one side may have a coupling portion to correspond to the shape of the opening 3, and the coupling portion may be preferably in a circular shape. The structure and shape of the coupling portion are not limited as long as the coupling portion may be coupled to seal the opening 3.

According to the exemplary embodiment, the battery cell 100 manufactured by the battery cell manufacturing method discharges the exhaust gas generated during the pre-charge through the exhaust chamber 7, thereby minimize the possibility of deforming the external shape of the battery cell 100 by the pressure of the exhaust gas and/or venting of the cap plate provided in the sealing body that seals the opened end of the battery can 2.

In the battery cell that is not manufactured by the battery cell manufacturing method, the exhaust gas generated during the pre-charge remains inside the battery cell, there is the possibility of deforming the external shape of the battery cell by the pressure of the exhaust gas and/or venting of the cap plate provided in the sealing body that seals the opened end of the battery can.

In the present invention, the positive electrode active material coated on the positive electrode and the negative electrode active material coated on the negative electrode may be used without limitation as long as the active material is known in the art.

In one example, the positive electrode active material may include an alkali metal compound represented by the general chemical formula A[AₓM_{y}]O_{2+z} (A includes at least one element among Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤ 2, -0.1 ≤ z ≤ 2; the stoichiometric modulus of the elements contained in x, y, z and M are chosen such that the compound remains electrically neutral).

In another example, the positive electrode active material may be the alkali metal compound xLiM¹O₂-(1-x)Li₂M²O₃ (M¹ includes at least one element having an average oxidation state 3; M² includes at least one element having an average oxidation state 4; 0≤ x ≤ 1) disclosed in US6,677,082, US6,680,143, and the like.

In another example, the positive electrode active material may be lithium metal phosphate represented by the general chemical formula LiaM¹xFe₁-xM²yP₁-yM³zO_{4-z} (M₁ includes at least one element selected from Ti, Si, Mn, Co, Fe, V, Cr, Mo, Ni, Nd, Al, Mg, and Al; M₂ includes at least one element selected from Ti, Si, Mn, Co, Fe, V, Cr, Mo, Ni, Nd, Al, Mg, Al, As, Sb, Si, Ge, V, and S; M₃ includes a halogen-group element selectively including F; 0 < a ≤ 2, 0 ≤ x ≤ 1, 0 ≤ y < 1, 0 ≤ z < 1; the stoichiometric modulus of the elements contained in a, x, y, z, M₁, M₂, and M₃ are chosen such that the compound remains electrically neutral), or Li₃M₂(PO₄)₃ (M includes at least one element selected from Ti, Si, Mn, Fe, Co, V, Cr, Mo, Ni, Al, Mg, and Al).

Preferably, the positive electrode active material may include primary particles and/or secondary particles in which the primary particles are aggregated.

In one example, the negative electrode active material may be a carbon material, lithium metal or lithium metal compound, silicon or silicon compound, tin or tin compound. Metal oxides, such as TiO2 and SnO2, with a potential of less than 2V may also be used as the negative electrode active material. As the carbon material, low crystalline carbon, high crystalline carbon, and the like may all be used.

As the separation membrane, a porous polymer film, for example, a porous polymer film made of a polyolefinbased polymer, such as an ethylene homopolymer, a propylene homopolymer, an ethylene/butene copolymer, an ethylene/hexene copolymer, or an ethylene/methacrylate copolymer may be used solely or may be stacked and used. As another example, the separation membrane may be a typical porous nonwoven fabric, for example, a nonwoven fabric made of high melting point glass fiber, polyethylene terephthalate fiber, or the like. At least one surface of the separation membrane may include a coating layer of inorganic particles. Further, it is also possible that the separation membrane itself is made of a coating layer of inorganic particles. The particles constituting the coating layer may have a structure bound to a binder so that an interstitial volume exists between adjacent particles.

The inorganic particles may be made of an inorganic material having a dielectric constant of 5 or more. As a non-limited example, the inorganic particle may include at least one material selected from the group consisting of Pb (Zr, Ti)O₃(PZT), Pb₁₋ₓLaₓZn_{1-y}Ti_{y}O₃ (PLZT), PB (Mg₃Nb_{2/3})O₃-PbTiO₃(PMN-PT), BaTiO₃, hafnia (HfO₂), SrTiO₃, TiO₂, Al₂O₃, ZrO₂, SnO₂, CeO₂, MgO, CaO, ZnO, and Y₂O₃.

The electrolyte may be a salt having a structure, such as A+B-. Herein, A⁺ includes an ion composed of an alkali metal positive ion, such as Li⁺, Na⁺, and K⁺, or a combination thereof. Further, B⁻ includes one or more negative ions selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

Further, the electrolyte may be dissolved in an organic solvent and used. As the organic solvent, propylene carbonate (PC), ethylenecarbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), and γbutyrolactone, or a mixture thereof may be used.

According to the exemplary embodiment, the cylindrical battery cell may be used for manufacturing a battery pack, and the battery pack may include an assembly in which the cylindrical battery cells are electrically connected and a pack housing accommodating the assembly. The cylindrical battery cell is the battery cell 100 according to the exemplary embodiment.

According to the exemplary embodiment, the battery pack may be mounted to a vehicle, and an example of the vehicle includes an electric vehicle, a hybrid vehicle, or a plug-in hybrid vehicle. The vehicle includes a fourwheeled vehicle or a two-wheeled vehicle.

## Claims

1. A battery cell manufacturing method, comprising:
(A) coupling an exhaust chamber (7) to an opening (3) at one side of a battery can (2), which accommodates an electrode assembly and an electrolyte, so as to seal the opening (3);
(B) adjusting the exhaust chamber (7) to an inert atmosphere; and
(C) performing a pre-charge on the electrode assembly and discharging exhaust gas generated due to the pre-charge through the exhaust chamber (7),
wherein in (A) coupling, the exhaust chamber (7) is provided in a shape to fit the opening (3) of the battery can (2).

2. The battery cell manufacturing method of claim 1, wherein the electrode assembly has a structure in which a first electrode, a separation membrane, and a second electrode are stacked and wound, and
the first electrode and the battery can (2) are electrically connected, and the battery cell further includes an electrode terminal (10) electrically connected with the second electrode.

3. The battery cell manufacturing method of claim 2, wherein the first electrode is a negative electrode and the second electrode is a positive electrode.

4. The battery cell manufacturing method of claim 1, wherein in the (B) adjusting, an oxygen concentration within the exhaust chamber (7) is adjusted to 4 vol% or less.

5. The battery cell manufacturing method of claim 1, wherein the (B) adjusting is the operation of injecting inert gas to the exhaust chamber (7).

6. The battery cell manufacturing method of claim 1, wherein the exhaust chamber (7) includes an inlet part injecting inert gas and an exhaust part discharging the exhaust gas.

7. The battery cell manufacturing method of claim 6, wherein in the (B) adjusting, inert gas is injected until an oxygen concentration within the exhaust chamber (7) is 4 vol% or less through the inlet part.

8. The battery cell manufacturing method of claim 1, wherein in the (A) coupling, the battery can (2) includes an electrode terminal (10) riveted through a through-hole (30) formed on a bottom (20) of the battery can (2) and a gasket (40) provided between the electrode terminal (10) and an outer diameter of the through-hole (30).

9. The battery cell manufacturing method of claim 8, wherein in the (C) performing a pre-charge, the battery cell includes a negative electrode terminal provided to the bottom (20) of the battery can (2), and the riveted electrode terminal (10) is a positive electrode terminal (10), and
the pre-charge is performed by connecting a charging terminal to the negative electrode terminal and the positive electrode terminal (10).

10. The battery cell manufacturing method of claim 9, wherein the charging terminal includes a positive charging pin (5) connected with the positive electrode terminal (10) and a negative charging pin (6) connected with the negative electrode terminal.

## Patentansprüche

1. Verfahren zur Herstellung von Batteriezellen, umfassend:
(A) Koppeln einer Auslasskammer (7) mit einer Öffnung (3) an einer Seite einer Batteriedose (2), die eine Elektrodenanordnung und einen Elektrolyten aufnimmt, um die Öffnung (3) zu verschließen;
(B) Einstellen der Auslasskammer (7) auf eine inerte Atmosphäre; und
(C) Durchführen einer Vorladung an der Elektrodenanordnung und Abführen von aufgrund der Vorladung erzeugtem Abgas durch die Auslasskammer (7),
wobei bei (A) dem Koppeln die Auslasskammer (7) in einer Form bereitgestellt wird, die zu der Öffnung (3) der Batteriedose (2) passt.

2. Verfahren zur Herstellung von Batteriezellen nach Anspruch 1, wobei die Elektrodenanordnung eine Struktur aufweist, in der eine erste Elektrode, eine Trennmembran und eine zweite Elektrode gestapelt und gewickelt sind, und
die erste Elektrode und die Batteriedose (2) elektrisch verbunden sind und die Batteriezelle ferner einen Elektrodenanschluss (10) aufweist, der elektrisch mit der zweiten Elektrode verbunden ist.

3. Verfahren zur Herstellung von Batteriezellen nach Anspruch 2, wobei die erste Elektrode eine negative Elektrode ist und die zweite Elektrode eine positive Elektrode ist.

4. Verfahren zur Herstellung von Batteriezellen nach Anspruch 1, wobei bei dem (B) Einstellen eine Sauerstoffkonzentration innerhalb der Auslasskammer (7) auf 4 Vol.-% oder weniger eingestellt wird.

5. Verfahren zur Herstellung von Batteriezellen nach Anspruch 1, wobei das (B) Einstellen der Vorgang des Einspritzens von Inertgas in die Auslasskammer (7) ist.

6. Verfahren zur Herstellung von Batteriezellen nach Anspruch 1, wobei die Auslasskammer (7) einen Einlassteil, der Inertgas einführt, und einen Auslassteil, der das Abgas abführt, aufweist.

7. Verfahren zur Herstellung von Batteriezellen nach Anspruch 6, wobei bei dem (B) Einstellen Inertgas durch den Einlassteil eingeführt wird, bis eine Sauerstoffkonzentration innerhalb der Auslasskammer (7) 4 Vol.-% oder weniger beträgt.

8. Verfahren zur Herstellung von Batteriezellen nach Anspruch 1, wobei bei dem (A) Koppeln die Batteriedose (2) einen Elektrodenanschluss (10), der durch ein Durchgangsloch (30) genietet ist, das an einem Boden (20) der Batteriedose (2) ausgebildet ist, und eine Dichtung (40), die zwischen dem Elektrodenanschluss (10) und einem Außendurchmesser des Durchgangslochs (30) bereitgestellt ist, aufweist.

9. Verfahren zur Herstellung von Batteriezellen nach Anspruch 8, wobei bei dem (C) Durchführen einer Vorladung die Batteriezelle einen negativen Elektrodenanschluss aufweist, der an dem Boden (20) der Batteriedose (2) bereitgestellt ist, und der genietete Elektrodenanschluss (10) ein positiver Elektrodenanschluss (10) ist, und
die Vorladung durch Verbinden eines Ladeanschlusses mit dem negativen Elektrodenanschluss und dem positiven Elektrodenanschluss (10) durchgeführt wird.

10. Verfahren zur Herstellung von Batteriezellen nach Anspruch 9, wobei der Ladeanschluss einen positiven Ladestift (5), der mit dem positiven Elektrodenanschluss (10) verbunden ist, und einen negativen Ladestift (6), der mit dem negativen Elektrodenanschluss verbunden ist, aufweist.

## Revendications

1. Procédé de fabrication d'un élément de batterie, comprenant :
(A) le couplage d'une chambre d'évacuation (7) à une ouverture (3) sur un côté d'un boîtier de batterie (2), qui contient un ensemble d'électrodes et un électrolyte, de façon à sceller l'ouverture (3) ;
(B) l'ajustage de la chambre d'évacuation (7) sur une atmosphère inerte ; et
(C) l'exécution d'une pré-charge sur l'ensemble d'électrodes et le refoulement du gaz d'évacuation généré du fait de la pré-charge à travers la chambre d'évacuation (7),
au couplage (A), la chambre d'évacuation (7) étant agencée sous une forme permettant de tenir dans l'ouverture (3) du boîtier de batterie (2).

2. Procédé de fabrication d'un élément de batterie selon la revendication 1, l'ensemble d'électrodes possédant une structure dans laquelle une première électrode, une membrane de séparation, et une deuxième électrode sont empilées et enroulées, et
la première électrode et le boîtier de batterie (2) étant connectés électriquement, et l'élément de batterie comprenant en outre une borne d'électrode (10) connectée électriquement à la deuxième électrode.

3. Procédé de fabrication d'un élément de batterie selon la revendication 2, la première électrode étant une électrode négative et la deuxième électrode étant une électrode positive.

4. Procédé de fabrication d'un élément de batterie selon la revendication 1, à l'ajustage (B) une concentration d'oxygène au sein de la chambre d'évacuation (7) étant ajustée à 4% en volume ou moins.

5. Procédé de fabrication d'un élément de batterie selon la revendication 1, l'ajustage (B) étant une opération d'injection d'un gaz inerte dans la chambre d'évacuation (7).

6. Procédé de fabrication d'un élément de batterie selon la revendication 1, la chambre d'évacuation (7) comprenant un élément d'entrée injectant un gaz inerte et un élément d'évacuation refoulant le gaz d'évacuation.

7. Procédé de fabrication d'un élément de batterie selon la revendication 6, à l'ajustage (B) un gaz inerte est injecté jusqu'à ce qu'une concentration d'oxygène au sein de la chambre d'évacuation (7) soit 4% en volume ou moins par l'élément d'entrée

8. Procédé de fabrication d'un élément de batterie selon la revendication 1, au couplage (A), le boîtier de batterie (2) comprenant une borne d'électrode (10) rivée à travers un trou traversant (30) formé sur un fond (20) du boîtier de batterie (2) et une garniture d'étanchéité (40) agencée entre la borne d'électrode (10) et un diamètre extérieur du trou traversant (30).

9. Procédé de fabrication d'un élément de batterie selon la revendication 8, à l'exécution (C) d'une pré-charge, l'élément de batterie comprenant une borne d'électrode négative agencée au fond (20) du boîtier de batterie (2), et la borne d'électrode rivée (10) étant une borne d'électrode positive (10), et
la pré-charge s'effectuant en connectant une borne de charge de la borne d'électrode négative et la borne d'électrode positive (10).

10. Procédé de fabrication d'un élément de batterie selon la revendication 9, la borne de charge comprenant une broche de charge positive (5) connectée à la borne d'électrode positive (10) et une broche de charge négative (6) connectée à la borne d'électrode négative.
